# EUROPÄISCHE PATENTANMELDUNG

(11) **EP 2 106 680 A1**
(43) Veröffentlichungstag der Anmeldung: **07.10.2009**
(21) Anmeldenummer: 08153920.7
(22) Anmeldetag: 01.04.2008
(51) Int. Cl.: A01B 45/02

(54) **Bodenbelüftungsvorrichtung**

(71) Anmelder: Redexim Handel-en Exploitatie Maatschappij B.V., 3702 AC Zeist (NL)
(72) Erfinder: de Bree, Cornelius Hermanus Maria, 3702 AC Zeist (NL)
(74) Vertreter: Dallmeyer, Georg

(57) **Zusammenfassung**

Bei einer fahrbare Bodenbelüftungsvorrichtung (1), mit einem Maschinenrahmen (2), einer Hauptantriebswelle (12) zum Anschluss an einen Antrieb, einer über ein Untersetzungsgetriebe (3) mit der Hauptantriebswelle (12) gekoppelte Abtriebswelle (14), vorzugsweise eine Kurbelwelle, über die mindestens ein Stechwerkzeug (4) auf- und abbewegbar ist, wobei das Stechwerkzeug (4) in den Boden (44) einstechbar und wieder herausziehbar ist, ist vorgesehen, dass an dem Untersetzungsgetriebe (3) unterschiedliche Übersetzungsverhältnisse einstellbar sind.

## Beschreibung

Die Erfindung betrifft eine fahrbare Bodenbelüftungsvorrichtung nach dem Oberbegriff des Anspruchs 1.

Derartige Vorrichtungen dienen dazu, mit Hilfe von Stechwerkzeugen Hohlräume in einen Boden einzubringen, wobei in die tieferen Bereiche des Bodens schlitzförmige Hohlräume eingebracht werden und an der Bodenfläche möglichst kleine Löcher auch bei höheren Fahrgeschwindigkeiten verbleiben sollen. Die Hohlräume ermöglichen einen besseren Abfluss von Wasser und Verbessern die Bodenbelüftung und durch die Auflockerung des Bodens wird das Pflanzenwachstum, insbesondere von Gräsern, verbessert.

Aus der Europäischen Offenlegungsschrift EP-A-0037595 ist eine Bodenbelüftungsvorrichtung bekannt, die zwei parallelogrammartig geführte Tragarme benutzt, die am einen Ende schwenkbar einen Werkzeughalter halten und die am anderen Ende am Maschinenrahmen schwenkbar gelagert sind. Die Schubstange des Kurbeltriebs ist an dem Werkzeughalter angelenkt und treibt diesen an, so dass dieser eine Auf- und Abbewegung ausführt. Einer der beiden Tragarme ist längenveränderlich und beinhaltet eine Anschlagfedereinrichtung. Solange sich das Stechwerkzeug außerhalb des Bodens befindet, liegt der Tragarm aufgrund der Federkraft an dem Anschlag an. Bei eingestochenem Stechwerkzeug und Vorwärtsbewegung der Bodenbelüftungsvorrichtung verschwenkt das Stechwerkzeug mit dem Werkzeughalter entgegen der Fahrtrichtung und der längenveränderliche Tragarm wird gegen die Federkraft verlängert.

Bei den bisher bekannten Bodenbelüftungsvorrichtung besteht jedoch der Nachteil, dass die Lochabstände der durch die Stechwerkzeuge in den Boden eingebrachten Löcher immer gleich sind. Je nach Untergrund, d.h. je nachdem ob es sich beispielsweise um ein Green bei einem Golfplatz oder ob es sich um einen Fußballplatz handelt, möchte man unterschiedliche Lochabstände haben. Es ist auch bekannt ein Verteilergetriebe zwischen zwei Hälften der Kurbelwelle anzuordnen. Das Verteilergetriebe zwischen den zwei Hälften der Kurbelwelle erfordert viel Platz. Die in den Boden eingebrachten Löcher sollen auch bezogen auf die Breite der Maschine einen gleichen Lochabstand zueinander aufweisen. Um dies zu erreichen sind die Schubstangen, insbesondere die neben dem Verteilergetriebe angeordneten Schubstangen, in Querrichtung gekrümmt, um durch einen axialen Versatz einen gleichmäßigen Abstand der Tragarme für die Einstechwerkzeuge zu ermöglichen. Gekrümmte Schubstangen sind jedoch insbesondere für die Lager nachteilig, da diese Querkräfte aufnehmen müssen.

Der Erfindung liegt demzufolge die Aufgabe zugrunde, eine Bodenbelüftungsvorrichtung so auszubilden, dass die obengenannten Nachteile vermieden werden und dass die Lochabstände der Löcher, die die Bodenbelüftungsvorrichtung mit Hilfe der Stechwerkzeuge in Fahrtrichtung in den Boden einbringt, auf eine einfache und kostengünstige Weise verändert werden können.

Zur Lösung dieser Aufgabe dienen die Merkmale des Anspruchs 1.

Die Erfindung sieht in vorteilhafter Weise vor, dass eine Bodenbelüftungsvorrichtung der einleitend beschriebenen Art, ein Untersetzungsgetriebe aufweist, wobei an dem Untersetzungsgetriebe unterschiedliche Übersetzungsverhältnisse einstellbar sind.

Dies hat den Vorteil, dass die in Fahrtrichtung verlaufenden Lochabstände der durch die Stechwerkzeuge in den Boden eingebrachten Löcher an unterschiedliche Böden oder Drainage- und Belüftungserfordernisse angepasst werden kann.

Das Untersetzungsgetriebe kann eine parallel zu einer Abtriebswelle verlaufende Antriebswelle aufweisen, die mit der Hauptantriebswelle gekoppelt ist.

Das Untersetzungsgetriebe kann an einer Außenseite einer das Ende der Kurbelwelle lagernden Wand des Maschinenrahmens angeordnet sein. Dies hat den Vorteil, dass die Teile des Untersetzungsgetriebes leicht zugänglich sind und daher in einfacher Weise ausgetauscht werden können.

Das Untersetzungsgetriebe ist vorzugsweise zwischen der Antriebs- und der Abtriebswelle angeordnet.

Das Untersetzungsgetriebe kann ein CVT-Getriebe sein. Dies hat den Vorteil, dass die Übersetzung stufenlos geändert werden kann. Außerdem kann der Riemen bei Überlast durchrutschen, so dass Maschinenteile nicht so schnell beschädigt werden.

Das Untersetzungsgetriebe kann ein Zahnradgetriebe mit auswechselbaren Zahnradpaarungen sein.

Die unterschiedlichen Zahnradpaarungen haben bei benachbarten Zahnrädern vorzugsweise den gleichen Achsabstand. Auf diese Weise können die Zahnradpaarungen in einfacher Weise ausgetauscht werden.

Das Untersetzungsgetriebe kann mindestens zwei auswechselbare Zahnradpaarungen aufweisen, wobei die Zahnräder vorzugsweise in einer Ebene angeordnet sind.

Die Zahnradachsen aller Zahnräder eines Untersetzungsgetriebes können einen gleichen Abstand zueinander aufweisen.

Das Untersetzungsgetriebe kann auch aus einem Schaltgetriebe bestehen. Das kann beispielsweise ein Planetenradgetriebe sein.

Die Antriebswelle kann an beiden Außenwänden mit jeweils einem Untersetzungsgetriebe gekoppelt sein und die Untersetzungsgetriebe können eine gemeinsame Abtriebswelle aufweisen.

Das Untersetzungsgetriebe kann eine vorzugsweise integrierte Rutschkupplung aufweisen.

Alternativ könnte anstatt des Untersetzungsgetriebes auch ein Übersetzungsgetriebe oder ein Getriebe mit einem Übersetzungsverhältnis von 1 verwendet werden.

Zwischen Hauptantriebswelle und der mindestens einen Antriebswelle kann ein Verteilergetriebe angeordnet ist. Das Verteilergetriebe kann in Fahrtrichtung gesehen vor der Abtriebswelle angeordnet sein. Alternativ kann das Verteilergetriebe in Fahrtrichtung gesehen hinter der Abtriebswelle angeordnet sein.

Das Verteilergetriebe kann mit einem Schaltgetriebe kombinierbar sein.

Im folgenden werden unter Bezugnahme auf die Zeichnungen Ausführungsbeispiele der Erfindung näher erläutert.

Es zeigen schematisch:
- Fig. 1: eine Bodenbelüftungsvorrichtung mit einem Stirnradgetriebe am Maschinenrahmen,
- Fig. 2: eine Bodenbelüftungsvorrichtung mit einem CVT-Getriebe,
- Fig. 3: eine Bodenbelüftungsvorrichtung mit sowohl einem Stirnradgetriebe als auch einem Riemenantrieb,
- Fig. 3a: eine Detailansicht des Ausführungsbeispiels aus Fig.3,
- Fig. 4: eine Bodenbelüftungsvorrichtung mit einem schaltbaren Stirnradgetriebe,
- Fig. 4a: eine Detailansicht des Ausführungsbeispiels aus Fig.4,
- Fig. 5: eine geschnittene Seitenansicht eines Ausführungsbeispiels mit Verteilergetriebe in Fahrtrichtung gesehen hinter der Abtriebswelle,
- Fig. 6: eine Rückansicht des Ausführungsbeispiels aus Fig. 5,
- Fig. 7: eine geschnittene Seitenansicht eines Ausführungsbeispiels mit Verteilergetriebe in Fahrtrichtung gesehen vor der Abtriebswelle.

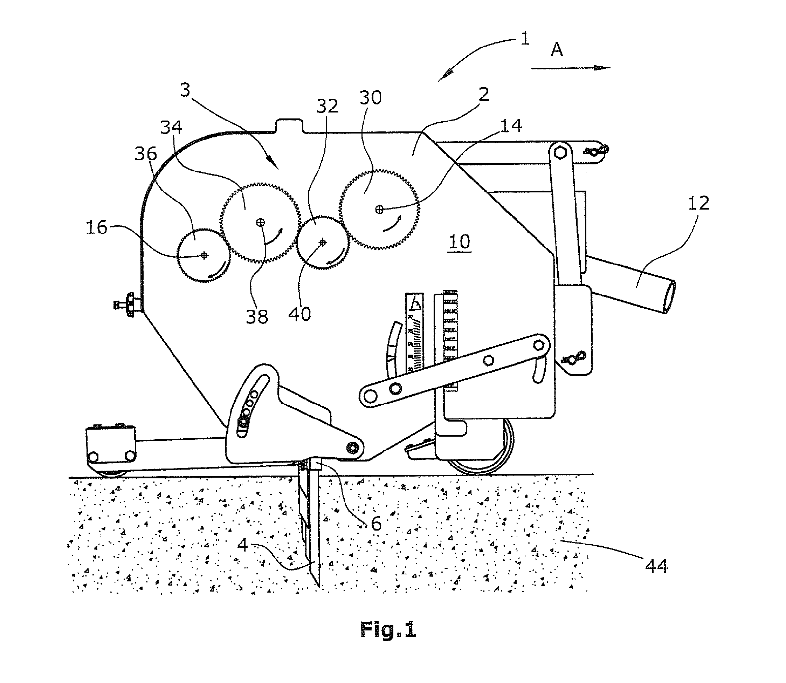

Fig. 1 zeigt eine Bodenbelüftungsvorrichtung, die mit Hilfe einer Zugmaschine gezogen werden kann. Die Bodenbelüftungsvorrichtung weist einen Maschinenrahmen 2 auf, in dem mehrere auf- und abbewegbare Stechwerkzeuge 4 schwenkbar gelagert sind. Es sind mehrere Stechwerkzeuge bzw. Gruppen von Stechwerkzeugen nebeneinander in Richtung quer zur Fahrtrichtung A angeordnet. Die Stechwerkzeuge 4 werden abwechselnd in den Boden 44 eingedrückt und können in dem Boden 44 aufgrund der Vorwärtsbewegung der Bodenbelüftungsvorrichtung 1 eine Schwenkbewegung ausführen, bei der der Boden 44 unterhalb des Einstecklochs schlitzförmig parallel zur Fahrtrichtung aufgebrochen wird, wodurch beispielsweise die Belüftung und die Drainage des Bodens 44 verbessert wird.

Die Stechwerkzeuge 4 sind einzeln oder als Gruppe an jeweils einem Werkzeughalter 6 befestigt. Die Werkzeughalter 6 sind jeweils an einem Tragarm 5 als Führungselement um eine Schwenkachse 7 schwenkbar gelagert. Die Tragarme 5 werden mit Hilfe eines Antriebs, vorzugsweise eines Kurbeltriebs 15, auf- und abbewegt. Durch die Auf- und Abbewegung der Tragarme 5 werden auch die Werkzeughalter 6 mit den Stechwerkzeugen 4 auf- und abbewegt, wobei die Stechwerkzeuge 4 in den Boden 44 einstechbar und wieder herausziehbar sind. Parallel zum Tragarm 5 ist ein längenveränderlicher Rückstellarm 58 angeordnet, der einerseits an dem Werkzeughalter 6 und andererseits an dem Maschinenrahmen 2 schwenkbar gelagert ist. Außerhalb des Bodens übt der Rückstellarm 58 beispielsweise durch eine in dem Rückstellarm 58 angeordnete Rückstellfeder eine Rückstellkraft auf den Werkzeughalter 6 aus, so dass dieser und damit auch die Stechwerkzeuge 4 außerhalb des Bodens wieder in die Ausgangslage zurückschwenken. Bezüglich der genauen Ausführung des parallelogrammartig geführten Werkzeughalters sei hier auf die Europäische Offenlegungsschrift EP-A-0037595 verwiesen.

Der Antrieb besteht vorzugsweise aus einem Kurbeltrieb 15. Der Antrieb weist eine Abtriebswelle 14 auf. Im Falle eines Kurbeltriebs 15 ist die Abtriebswelle 14 eine Kurbelwelle. Die Abtriebswelle 14 ist quer zur Fahrtrichtung und parallel zum Boden 44 angeordnet und mindestens an beiden Seiten der Bodenbelüftungsvorrichtung, vorzugsweise an mehreren Stellen, in dem Maschinenrahmen 2 gelagert. Die Abtriebswelle 14 ist über ein Untersetzungsgetriebe 3 mit einer im wesentlichen parallel zur Fahrrichtung verlaufenden Hauptantriebswelle 12 gekoppelt. Die Hauptantriebswelle 12 wird von dem Antrieb der Zugmaschine angetrieben. Alternativ kann bei einer selbstfahrenden Bodenbelüftungsvorrichtung 1 die Hauptantriebswelle 12 auch von einem eigenen Motor der Bodenbelüftungsvorrichtung 1 angetrieben werden.

Das Untersetzungsgetriebe 3 weist weiter eine Antriebswelle 16 auf. Die Antriebswelle 16 verläuft parallel zu der Abtriebswelle 14. Die Antriebswelle 16 ist ebenfalls auf beiden Seiten der Bodenbelüftungsvorrichtung in dem Maschinenrahmen 2 gelagert. Die Enden der Abtriebs- und die Antriebswelle 14,16 stehen an mindestens einer Seite gegenüber den Seitenwänden 10 des Maschinenrahmens 2 seitlich nach Außen hervor. An dem gegenüber dem Maschinenrahmen 2 nach Außen hervorstehenden freien Ende der Antriebswelle 16 ist ein Zahnrad 36 angebracht und mit dieser drehfest verbunden. Die Antriebswelle 16 treibt über das Zahnrad 36 und über zwei weitere Zahnräder 34,32 ein Zahnrad 30 an, das drehfest mit der Abtriebswelle 14 verbunden ist.

Das Zahnrad 30 der Abtriebswelle 14 ist an dem gegenüber dem Maschinenrahmen 2 nach Außen hervorstehenden freien Ende der Abtriebswelle 14 angeordnet. Die beiden Zahnräder 32,34 sind drehfest mit jeweils einem Achszapfen 38,40 verbunden, der jeweils in der Seitenwand des Maschinenrahmens 2 gelagert ist. Die beiden Zahnräder 32,34 sind ebenfalls auf der Außenseite der Seitenwand 10 des Maschinenrahmens 2 angeordnet. Das Untersetzungsgetriebe 3 mit den Zahnrädern 30,32,34,36 ist von einem abnehmbaren Gehäuse oder Deckel umschlossen, um eine Unfallgefahr im Betrieb auszuschließen und um eine Verschmutzung des Untersetzungsgetriebes zu vermeiden.

Diese Ausführungsform hat den Vorteil, dass die Zahnräder 30,32,34,36 leicht abmontiert werden können, da die Zahnräder 30,32,34,36 auf der Außenseite des Maschinenrahmens 2 angeordnet sind. Die Zahnräder 30,32,34,36 können durch andere Zahnräder, die jeweils eine andere Anzahl von Zähnen und somit andere Durchmesser aufweisen, ausgetauscht werden. Auf diese Weise kann die Übersetzung des Untersetzungsgetriebes und damit der in Fahrtrichtung erzeugte Lochabstand im Boden verändert werden. Dadurch kann die Winkelgeschwindigkeit der Kurbelwelle, die bewirkt, dass die Stechwerkzeuge 4 in den Boden eingestochen und wieder herausgezogen werden, verändert werden.

Die jeweiligen austauschbaren Zahnradpaarungen haben vorzugsweise den gleichen Achsabstand zueinander wie die Zahnräder 30,32 und 34,36. Auf diese Weise müssen keine zusätzlichen Achszapfen in dem Maschinenrahmen 2 gelagert sein, wenn die Zahnräder 30,32,34,36 ausgetauscht werden sollen. Es besteht auch die Möglichkeit das Übersetzungsverhältnis dadurch zu ändern, dass die gleiche Zahnradpaarung verwendet wird und lediglich die Position der kleineren bzw. größeren Zahnräder so auszutauschen, dass die größeren Zahnräder die Position der kleineren Zahnräder einnehmen und umgekehrt.

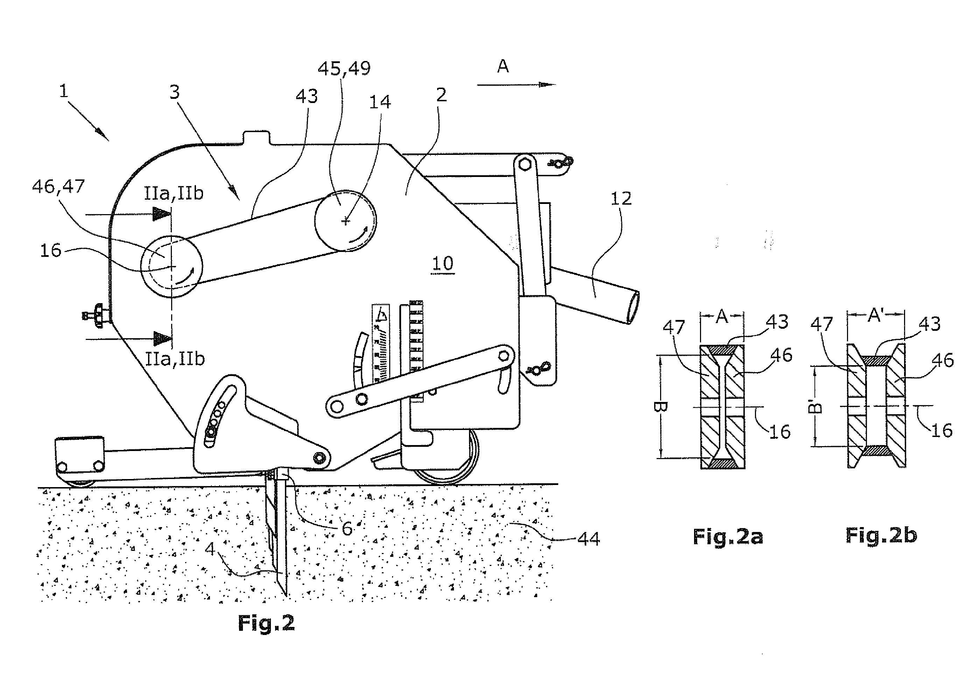

Fig. 2 zeigt eine Bodenbelüftungsvorrichtung, wie in Fig. 1, mit dem Unterschied, dass als Untersetzungsgetriebe 3 ein CVT-Getriebe verwendet wird. Ein CVT-Getriebe zeichnet sich dadurch aus, dass die Übersetzung zwischen Antriebs- und Abtriebswelle 16,14 stufenlos eingestellt werden kann. Dies geschieht bei dem Ausführungsbeispiel aus Fig. 2 dadurch, dass an dem gegenüber dem Maschinenrahmen 2 nach Außen überstehenden Ende der Antriebswelle 16 ein Kegelscheibenpaar 46,47 angebracht ist. Das Kegelscheibenpaar 46,47 ist mit der Antriebswelle 16 drehfest verbunden. Zwischen den jeweiligen Kegelscheiben 46,47 läuft ein Riemen 43. Der Riemen 43 treibt ein zweites Kegelscheibenpaar 45,49 an, das mit der Abtriebswelle 14 drehfest verbunden ist. Die beiden Kegelscheiben 46,47 können in Richtung der Antriebswelle 16 derart auseinandergezogen werden, dass der für den Riemen 43 wirksame Durchmesser der Kegelscheiben 46,47 z.B. von B zu B' verkleinert wird. Die beiden Kegelscheiben 45,49 werden gleichzeitig zusammengedrückt, so dass sich der wirksame Durchmesser der Kegelscheiben 45,49 vergrößert. Dadurch dass der wirksame Durchmesser der Kegelscheiben 46,47 und 45,49 verändert wird, wird auch die Umlaufgeschwindigkeit des Riemens 43 geändert. Auf diese Weise wird die Übersetzung des Untersetzungsgetriebes 3 geändert.

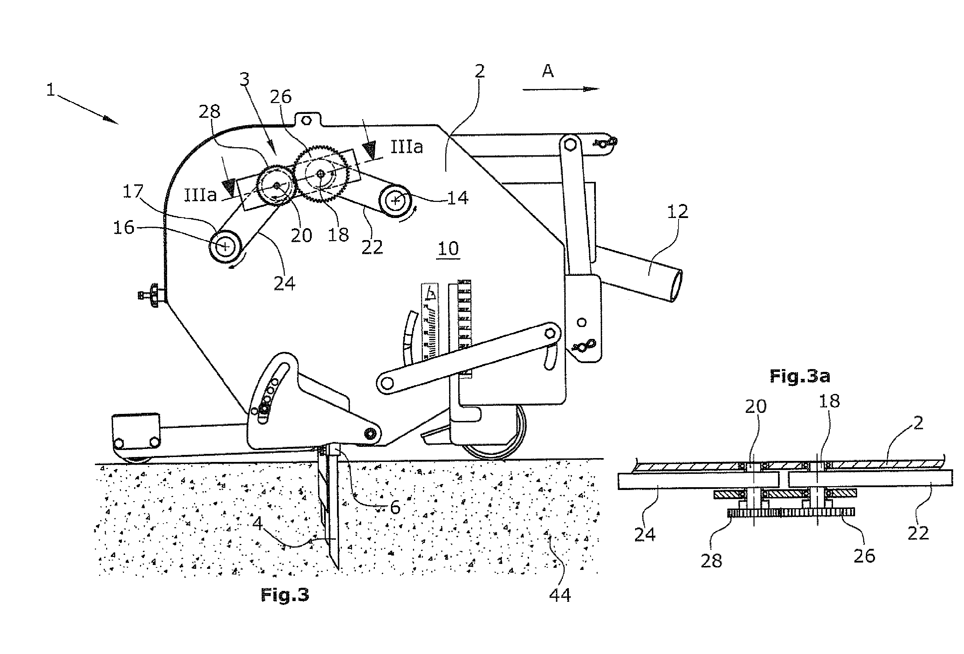

Fig. 3 zeigt eine Bodenbelüftungsvorrichtung, die den Ausführungsformen der Fign. 1 und 2 ähnlich ist. Die Bodenbelüftungsvorrichtung in Fig. 3 unterscheidet sich dadurch, dass das Untersetzungsgetriebe 3 eine Kombination aus einem Riementrieb und einem Stirnradgetriebe ist. An dem gegenüber dem Maschinenrahmen 2 nach Außen überstehenden Ende der Antriebswelle 16 ist eine Riemenscheibe 17 drehfest befestigt. Die Riemenscheibe 17 treibt über einen Riemen 24 das Zahnrad 28 an. Das Zahnrad 28 treibt wiederum das Zahnrad 26 an. Die beiden Zahnräder 26,28 sind jeweils auf einem Achszapfen 18,20 drehfest gelagert, der in dem Maschinenrahmen gelagert ist. Das Zahnrad 26 treibt über einen Riemen 22 die Abtriebswelle 14 an. Ein Vorteil dieses Ausführungsbeispiels ist, dass die Riemen bei Überlast durchrutschen können. Alternativ könnten auch ein Kettenantrieb mit Kettenzahnrädern verwendet werden. Bei diesem Ausführungsbeispiel benötigt man jedoch als Überlastsicherung zusätzlich eine Rutschkupplung.

Die beiden Zahnräder 26,28 können durch andere Zahnräder, die eine andere Anzahl von Zähnen und somit einen anderen Durchmesser aufweisen, ausgetauscht werden. Die anderen Zahnräder sollten den gleichen Achsabstand zueinander aufweisen wie die beiden Zahnräder 26,28, damit bei Austausch der Zahnräder nicht auch die Riemen 22,24 ausgetauscht werden müssen und zusätzliche Achszapfen vorgesehen werden müssen. Die Längen der Riemen 22,24 können somit konstant bleiben. Durch einen Austausch der Zahnräder 26,28 durch andere Zahnräder mit einer anderen Anzahl von Zähnen kann die Übersetzung des Untersetzungsgetriebes 3 geändert werden. Die Zahnradpaare weisen, wenn die austauschbaren Zahnradpaare das gleiche Modul m aufweisen, den gleichen Achsabstand zueinander auf, wenn die Zahnradpaare jeweils die gleiche Gesamtanzahl von Zähnen aufweisen, damit die gleichen in der Seitenwand 10 gelagerten Achszapfen verwendet werden können. Bei Austausch der Positionen wird nur ein Zahnradpaar benötigt, wenn die beiden das Zahnradpaar bildenden Zahnräder nicht die gleiche Zähnezahl und somit nicht den gleichen Achsabstand zueinander aufweisen.

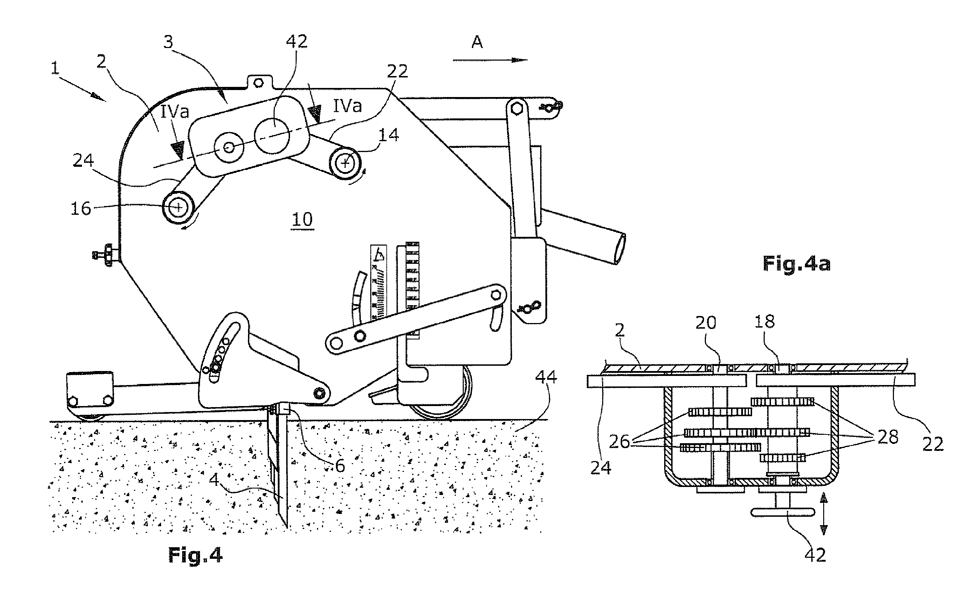

Fig. 4 zeigt ein Ausführungsbeispiel, das dem aus Fig. 3 sehr ähnlich ist. Es unterscheidet sich dadurch, dass anstelle der Zahnräder 26,28 mehrere Zahnradpaarungen 26,28 angeordnet sind. Diese Zahnradpaarungen weisen jeweils den gleichen Achsabstand zueinander auf. Die Zahnräder 28 sind alle mit dem Achszapfen 20 drehfest verbunden und werden über den Riemen 24 von der Antriebswelle 16 angetrieben. Die Zahnräder 26 sind alle mit dem Achszapfen 18 drehfest verbunden und treiben über den Riemen 22 die Abtriebswelle 14 an. Die Achszapfen 18,20 sind in dem Maschinenrahmen 2 gelagert. Die Zahnräder 26 sind auf dem Achszapfen 18 in anderen gegenseitigen Abständen zueinander angeordnet als die Zahnräder 28 auf dem Achszapfen 20. Dies ermöglicht, dass unterschiedliche Zahnradpaarungen im Eingriff sein können. Dadurch dass der Stellhebel 42 die Zahnräder 26 auf dem Achszapfen 18 axial verschiebt, können unterschiedliche Zahnradpaarungen 26,28 in den Eingriff miteinander gebracht werden. Bei diesem Schaltgetriebe lässt sich die Übersetzung ohne Montage und schnell ändern. Alternativ könnten auch bei diesem Ausführungsbeispiel ein Kettenantrieb mit Kettenzahnrädern verwendet werden, wobei auch in diesem Fall zusätzlich eine Rutschkupplung benötigt wird.

Die Abtriebswelle 14 kann an beiden Seiten der Bodenbelüftungsvorrichtung 1 gegenüber dem Maschinerahmen 2 nach Außen überstehen. Bei den Ausführungsbeispielen aus den Fign. 1 bis 4 kann jeweils ein Untersetzungsgetriebe 3 an den beiden gegenüber dem Maschinerahmen 2 überstehenden Enden der Abtriebswelle 14 angeordnet sein. Die Abtriebswelle 14, die vorzugsweise eine Kurbelwelle ist, kann auch in Längsrichtung vorzugsweise in der Mitte zweigeteilt sein.

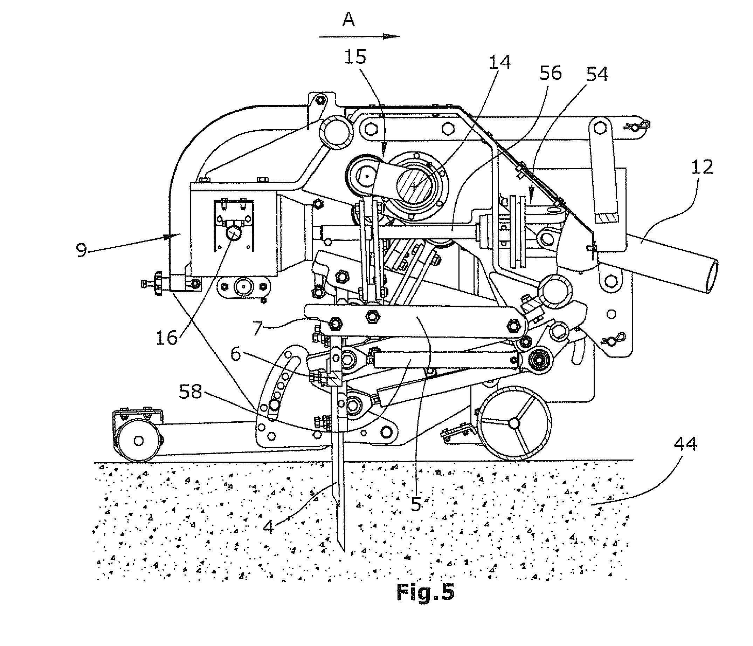

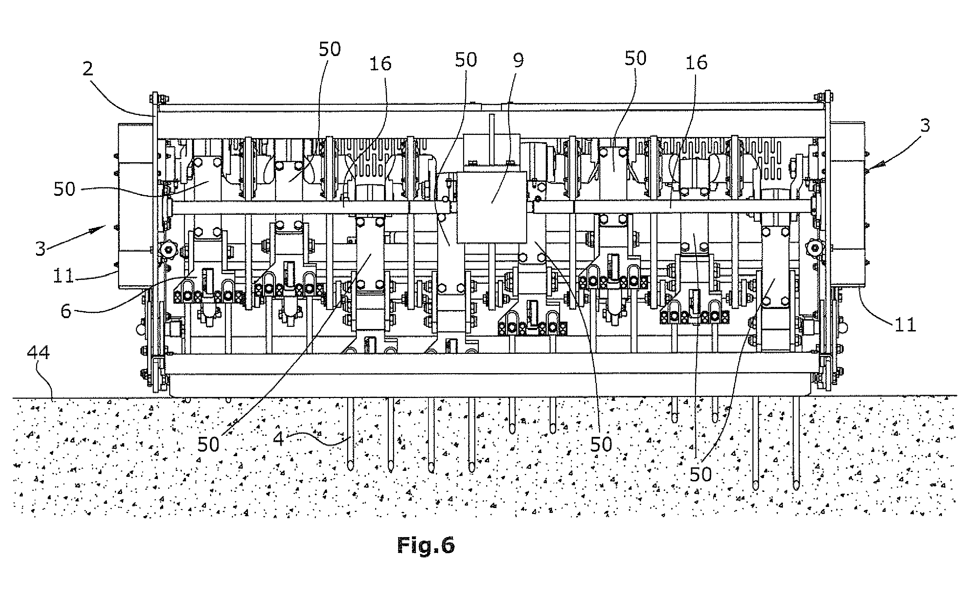

Fig. 5 zeigt eine geschnittenen Seitenansicht eines der Ausführungsbeispiele aus den Fign. 1-4. Die Antriebswelle 16 befindet sich in Fahrtrichtung A gesehen hinter der Abtriebswelle 14, die in diesem Fall eine Kurbelwelle ist. Zwischen der Hauptantriebswelle 12 und der Antriebswelle 16 ist ein Verteilergetriebe 9 angeordnet. Die Hauptantriebswelle 12 ist über ein Kardangelenk 54 und eine Zwischenwelle 56 mit dem Verteilergetriebe 9 gekoppelt. Das Verteilergetriebe 9 ist innerhalb der Breite der Bodenbelüftungsmaschine 1 vorzugsweise mittig angeordnet. Das Verteilergetriebe 9 befindet sich ebenfalls in Fahrtrichtung A gesehen hinter der Abtriebswelle 14. Dies hat den Vorteil, dass das Verteilergetriebe 9 nicht zwischen zwei Kurbelwellenhälften angeordnet ist und dadurch die Schubstangen 50, wie aus Fig. 6 ersichtlich, geradlinig verlaufen.

In Fig. 6 ist eine Rückansicht der Bodenbelüftungsmaschine 1 aus Fig. 5 ohne hinterer Schutzverkleidung dargestellt. Es ist deutlich zu erkennen, dass die Schubstangen 50 geradlinig sind, wodurch die Lagerbelastung symmetrisch erfolgt, da keine bzw. nur sehr geringe Querkräfte auf die Lager einwirken. Es ist jeweils ein Untersetzungsgetriebe 3 an den Außenseiten der beiden Außenwände des Maschinenrahmens 2 angeordnet, wobei die Untersetzungsgetriebe 3 durch jeweils eine Schutzgehäuse 11 umschlossen sind. Die Untersetzungsgetriebe 3 können aus einem der in den Fign. 1-4 dargestellten Untersetzungsgetrieben 3 bestehen. Alternativ könnte auch ein Schaltgetriebe mit dem Verteilergetriebe 9 kombinierbar sein.

Das Ausführungsbeispiel aus Fig. 5 bzw. Fig.6 hat den zusätzlichen Vorteil, dass dadurch, dass das Verteilergetriebe 9 in Fahrtrichtung gesehen hinter der Abtriebswelle 14 angeordnet ist, der Abstand zwischen ziehbarer Bodenbelüftungsmaschine 1 und Zugmaschine verkleinert ist. Dies hat den Vorteil, dass die gesamte Bodenbelüftungsvorrichtung 1 leichter durch die Zugmaschine angehoben werden kann, wenn sie außer Betrieb ist.

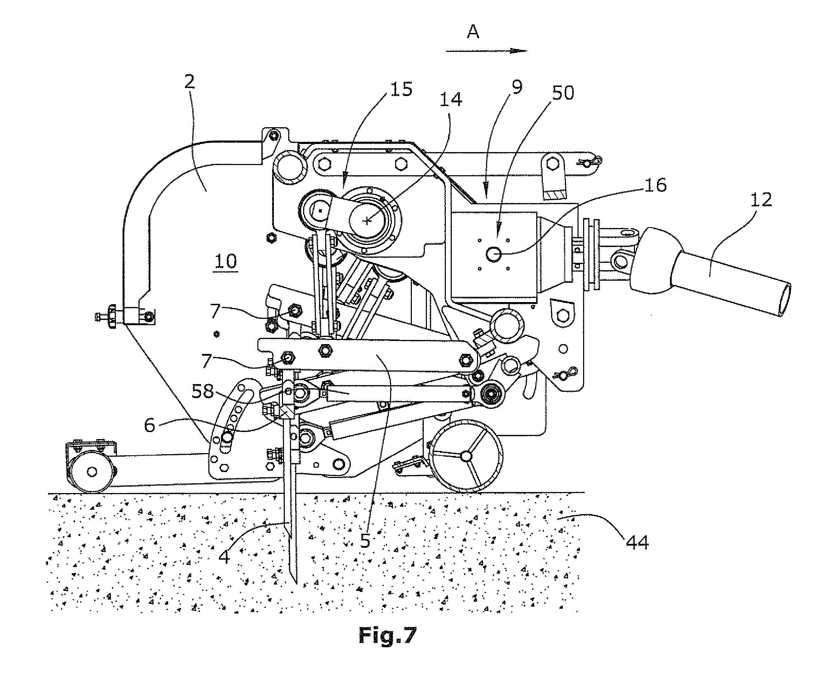

Fig. 7 zeigt eine Bodenbelüftungsmaschine, bei der ein Verteilergetriebe 9 am Ende der Hauptantriebswelle 12 gelenkig angekoppelt ist. Das Verteilergetriebe 9 ist innerhalb der Breite der Bodenbelüftungsmaschine 1 vorzugsweise mittig angeordnet. Das Verteilergetriebe 9 ist in Fahrtrichtung gesehen vor der Abtriebswelle 14, die vorzugsweise eine Kurbelwelle ist, angeordnet. Das Verteilergetriebe 9 ist zwischen der Hauptantriebswelle 12 und den Antriebswellen 16 angeordnet. Die Hauptantriebswelle 12 ist die Eingangswelle des Verteilergetriebes 9. Die Ausgangswellen des Verteilergetriebes 9 stellen die Antriebswellen 16 dar. Die Antriebswellen 16 verlaufen quer zur Fahrtrichtung A und parallel zum Boden 44. An den beiden Außenseiten der beiden Seitenwände des Maschinenrahmens 2 kann, genauso wie bei dem Ausführungsbeispiel aus Fig. 5 bzw. Fig. 6, jeweils ein in den Übersetzungsverhältnissen einstellbares Untersetzungsgetriebe 3 angeordnet sein, das die Antriebswellen 16 mit der Abtriebswelle 14 koppelt.

Alternativ kann das Verteilergetriebe 9 mit einem Schaltgetriebe kombinierbar sein. Das Schaltgetriebe könnte beispielsweise ein Planetenradgetriebe oder ein anderes schaltbares Zahnradgetriebe sein. Die Kombination aus Verteilergetriebe 9 und Schaltgetriebe könnte vorzugsweise eingangsseitig direkt mit einer Rutschkupplung gekoppelt sein. Die Kombination aus Verteilergetriebe 9 und Schaltgetriebe ist, genauso wie das Verteilergetriebe 9 alleine, innerhalb der Breite der Bodenbelüftungsmaschine 1 vorzugsweise mittig angeordnet. Das Schaltgetriebe könnte beispielsweise ein Planetenradgetriebe oder ein anderes schaltbares Zahnradgetriebe sein. Die Kombination aus Verteilergetriebe 9 und Schaltgetriebe könnte vorzugsweise eingangsseitig direkt mit einer Rutschkupplung gekoppelt sein. Im Falle einer Kombination aus Verteilergetriebe 9 und Schaltgetriebe könnten die Antriebswellen 16 die Abtriebswelle 14 beispielsweise über nicht in den Übersetzungsverhältnissen einstellbare Getriebe mit Riemen oder Ketten oder Zahnrädern an den Seiten der Bodenbelüftungsvorrichtung antreibbar sein.

Das Ausführungsbeispiel aus Fig.7 hat ebenfalls den Vorteil, dass das Verteilergetriebe 9 nicht zwischen Kurbelwellenhälften angeordnet ist. Dadurch sind die Schubstangen 50 ebenfalls gerade ausführbar.

## Patentansprüche

1. Fahrbare Bodenbelüftungsvorrichtung (1), mit
- einem Maschinenrahmen (2),
- einer Hauptantriebswelle (12) zum Anschluss an einen Antrieb,
- einer über ein Untersetzungsgetriebe (3) mit der Hauptantriebswelle (12) gekoppelte Abtriebswelle (14), vorzugsweise eine Kurbelwelle, über die mindestens ein Stechwerkzeug (4) auf- und abbewegbar ist, wobei das Stechwerkzeug (4) in den Boden (44) einstechbar und wieder herausziehbar ist,
**dadurch gekennzeichnet,**
**dass** an dem Untersetzungsgetriebe (3) unterschiedliche Übersetzungsverhältnisse einstellbar sind.

2. Bodenbelüftungsvorrichtung nach Anspruch 1, **dadurch gekennzeichnet, dass** das Untersetzungsgetriebe (3) eine parallel zu der Abtriebswelle (14) verlaufende Antriebswelle (16) aufweist, die mit der Hauptantriebswelle (12) gekoppelt ist.

3. Bodenbelüftungsvorrichtung nach einem der Ansprüche 1 oder 2, **dadurch gekennzeichnet, dass** das Untersetzungsgetriebe (3) an einer Außenseite einer das Ende der Kurbelwelle lagernden Wand des Maschinenrahmens (2) angeordnet ist.

4. Bodenbelüftungsvorrichtung nach Anspruch 1 oder 2, **dadurch gekennzeichnet, dass** zwischen der Antriebs- und der Abtriebswelle (16,14) ein Untersetzungsgetriebe (3) angeordnet ist.

5. Bodenbelüftungsvorrichtung nach einem der Ansprüche 1 bis 3, **dadurch gekennzeichnet, dass** das Untersetzungsgetriebe (3) ein CVT-Getriebe ist.

6. Bodenbelüftungsvorrichtung nach einem der Ansprüche 1 bis 3, **dadurch gekennzeichnet, dass** das Untersetzungsgetriebe (3) ein Zahnradgetriebe mit auswechselbaren Zahnradpaarungen (30,32,34,36, 26,28) ist.

7. Bodenbelüftungsvorrichtung nach Anspruch 6, **dadurch gekennzeichnet, dass** die unterschiedlichen Zahnradpaarungen benachbarter Zahnräder (30,32;34,36;26,28) den gleichen Achsabstand aufweisen.

8. Bodenbelüftungsvorrichtung nach Anspruch 6 oder 7, **dadurch gekennzeichnet, dass** das Untersetzungsgetriebe (3) mindestens zwei auswechselbare Zahnradpaarungen (30,32 und 34,36) aufweist.

9. Bodenbelüftungsvorrichtung nach einem der Ansprüche 1 bis 8, **dadurch gekennzeichnet, dass** das Untersetzungsgetriebe (3) eine Kombination aus einem kraft- oder formschlüssigen Zugmittelgetriebe und einem Zahnradgetriebe ist.

10. Bodenbelüftungsvorrichtung nach einem der Ansprüche 1 bis 9, **dadurch gekennzeichnet, dass** das Untersetzungsgetriebe (3) an der Außenseite mindestens einer Außenwand des Maschinenrahmens (2) angeordnet ist.

11. Bodenbelüftungsvorrichtung nach einem der Ansprüche 1 bis 10, **dadurch gekennzeichnet, dass** die Antriebswelle (16) an beiden Außenwänden mit jeweils einem Untersetzungsgetriebe (3) gekoppelt ist und dass die Untersetzungsgetriebe (3) eine gemeinsame Abtriebswelle (14) aufweisen.

12. Bodenbelüftungsvorrichtung nach einem der Ansprüche 1 bis 11, **dadurch gekennzeichnet, dass** das Untersetzungsgetriebe (3) aus einem Schaltgetriebe besteht.

13. Bodenbelüftungsvorrichtung nach Anspruch 12, **dadurch gekennzeichnet, dass** über das Schaltgetriebe die Hauptantriebswelle (12) und die Abtriebswelle (14) miteinander gekoppelt sind.

14. Bodenbelüftungsvorrichtung nach einem der Ansprüche 1 bis 13, **dadurch gekennzeichnet, dass** das Untersetzungsgetriebe (3) eine Rutschkupplung aufweist.
